(19) Europäisches Patentamt
European Patent Office
Office européen des brevets

(11) Veröffentlichungsnummer: **0 199 169**
**B1**

(12) # EUROPÄISCHE PATENTSCHRIFT

(45) Veröffentlichungstag der Patentschrift: **01.03.89**

(51) Int. Cl.⁴: **B 01 D 53/36**, B 01 J 29/14, B 01 J 37/04

(21) Anmeldenummer: **86104720.7**

(22) Anmeldetag: **07.04.86**

(54) **Verfahren zur Reduzierung von Stickoxiden.**

(30) Priorität: **16.04.85 DE 3513567**

(43) Veröffentlichungstag der Anmeldung: **29.10.86 Patentblatt 86/44**

(45) Bekanntmachung des Hinweises auf die Patenterteilung: **01.03.89 Patentblatt 89/9**

(84) Benannte Vertragsstaaten: **AT BE CH DE FR GB IT LI NL SE**

(56) Entgegenhaltungen:
**US-A- 4 052 337**
**US-A- 4 157 375**

(73) Patentinhaber: **BAYER AG, Konzernverwaltung RP Patentabteilung, D-5090 Leverkusen 1 Bayerwerk (DE)**

(72) Erfinder: **Weber, Horst, Dr., Fontanestrasse 11, D-5090 Leverkusen 1 (DE)**
Erfinder: **Mengel, Manfred, Dr., Bergstrasse 54a, D-5068 Odenthal (DE)**
Erfinder: **Beyer, Gerhard, Morsbroicher Strasse 43, D-5090 Leverkusen 1 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft ein Verfahren zur Reduzierung von Stickoxiden in den Abgasen von Verbrennungsanlagen.

Verbrennungsanlagen, beispielsweise in erdgas-, öl- oder kohlebeheizten Kraftwerken produzieren Abgase, die in ungereinigtem Zustand etwa 100 - 2.000 mg/Nm$^3$ Stickoxide ($NO_x$), hauptsächlich in Form von Stickstoffmonoxid (NO), enthalten. Diese Stickoxide werden gebildet

a. durch Oxidation der in den Brennstoffen stets enthaltenen organischen Stickstoffverbindungen,

b. durch Reaktion des Luftstickstoffs mit Luftsauerstoff, die in umso stärkerem Maße stattfindet, je höher die Temperaturen beim Brennvorgang sind.

Aus Gründen des Umweltschutzes ist es dringend erforderlich, den Ausstoß an Stickoxiden aus Verbrennungsanlagen drastisch herabzusetzen. Es hat daher nicht an Bemühungen gefehlt, Verfahren zur Reduzierung der $NO_x$-Gehalte zu entwickeln. Eine aktuelle Übersicht über derartige Verfahren ist z.B. in Hydrocarbon Processing, November 1984, S. 123 - 129, zu finden.

Besonderes Interesse hat ein Verfahren gefunden, das man SCR-Verfahren (Selective Catalytic Reduction) nennt. Das SCR-Verfahren nutzt die katalytische Reduktion der Stickoxide mit Ammoniak in Gegenwart von Luftsauerstoff unter Bildung von hauptsächlich Stickstoff und Wasserdampf aus:

$$4\,NO + 4\,NH_3 + O_2 \rightarrow 4\,N_2 + 6\,H_2O$$

$$2\,NO_2 + 4\,NH_3 + O_2 \rightarrow 3\,N_2 + 6\,H_2O$$

Als Katalysatoren werden im allgemeinen Metalle wie Eisen, Vanadium, Chrom, Mangan, Kobalt, Nickel, Kupfer oder Barium oder deren Verbindungen auf einem Träger aus Aluminiumoxid, Titandioxid oder Siliciumoxid angewendet. Der verbreiteste Katalysator enthält Vanadiumverbindungen auf Titandioxid als Träger. Die Reaktionstemperatur beträgt normalerweise 300 - 450°C.

Katalysatoren auf Zeolith-Basis für die Reaktion von $NO_x$ mit $NH_3$ werden in der US-A-3 895 094 beschrieben, in der säurefeste Zeolithe mit Porendurchmesser >0,6 nm einem $SiO_2/Al_2O_3$-Verhältnis >10 in Abgasen von Salpetersäuregewinnungsanlagen eingesetzt werden. Die Reaktionstemperatur beträgt hierbei 200 - 300°C; der Einsatz ist jedoch auf Abgasströme mit maximal 10 Vol-% Sauerstoff beschränkt.

In der DE-B-23 41 744 werden für die katalytische Reduktion von $NO_x$ mit $NH_3$ auch aus Abgasen von mit fossilen Brennstoffen geheizten Kraftwerksanlagen Zeolithe vorgeschlagen, wobei beispielshaft die Typen Ag-Zeolith X (bei Temperaturen von 200 - 250°C), Na-Zeolith X sowie natürlicher und synthetischer Mordenit (bei Temperaturen von 275 - 325°C) erwähnt werden. Mit Ausnahme des aus wirtschaftlichen Gründen nicht interessanten Ag-Zeolith X arbeiten die Katalysatoren also nur bei relativ hoher Temperatur.

Aus US-A-4 052 337 ist ebenfalls ein Material auf Basis Zeolith bekannt, das für die Reduktion von Stickoxiden geeignet ist. Es wird durch einen komplizierten Ionenaustausch erhalten und arbeitet ebenfalls nur bei relativ hohen Temperaturen.

In einer Reihe von Veröffentlichungen von T. Seiyama et al. (J. of Catalysis 48 (1977), 1-7; 55 (1978), 119-128; 59 (1979), 319-324; Ind. Eng. Chem. Prod. Res. Dev. 18 (1979), 279-283), sowie W.B. Williamson und J. H. Lunsford (J. of Physical Chemistry 80 (1976), 2664-2671) wird eine Aktivität von partiell mit $CU^{2+}$ ausgetauschten Zeolithen vom Typ Y bei niedrigen Temperaturen (maximale Aktivität bei 120°C) festgestellt. Diese Arbeiten enthalten jedoch keinerlei Hinweise für eine Ausgestaltung des Verfahrens in der Technik, vor allem für die katalytische Entfernung von Stickoxiden aus den Abgasen von Verbrennungsanlagen.

Aufgabe der vorliegenden Erfindung war es daher, die an sich bekannte chemische Reaktion von $NO_x$ mit $NH_3$ an einem bei niedriger Temperatur aktiven Zeolith-Katalysator vom Typ Faujasit für ein technisches Verfahren zur Reduzierung von Gehalten an Stickoxiden in Abgasen von Verbrennungsanlagen zu nutzen.

Gegenstand der vorliegenden Erfindung ist daher ein Verfahren zur Reduzierung des Stickoxid-Gehaltes in Abgasen von Verbrennungsanlagen durch katalytische Reduktion mit Ammoniak in Gegenwart von einem oder mehreren Alumosilicaten der Faujasitgruppe und einer Kupferverbindung, dadurch gekennzeichnet, daß man die Abgase an temperaturbeständigen Flächengebilden vorbeiführt, die mit dem Katalysatorgemisch beschichtet sind, das zusätzlich Kieselsol und/oder Silicate enthält.

Die Aufgabe wird vorzugsweise dadurch gelöst, daß man die mit Ammoniak versetzten Abgase durch ein System von Katalysatorplatten leitet, die parallel zueinander mit einem freien Abstand von ca. 0,1 bis 2,0 cm angeordnet sind und aus thermisch und hydrothermal beständigen silicatischen Preßplatten bestehen, die mit einem Gemisch aus einem oder mehreren Zeolithen der Faujasitgruppe, aus Kieselsol und/oder Silicaten, aus Glasfaser und aus einer Kupferverbindung beschichtet worden sind.

Hauptvorteil des erfindungsgemäßen Verfahrens ist die schon erwähnte Durchführbarkeit im niederen Temperaturbereich von 100 - 250°C. Dieser Vorteil zeigt sich beispielsweise bei Heizkraftwerken darin, daß der Katalysator im Strom der Verbrennungsgase erst nach dem letzten Wärmetauscher und nach der elektrostatischen Feinstaubentfernung installiert zu werden braucht. Eine derartige Installation ist bei Altkraftwerken leichter zu realisieren als bei der nach dem bisherigen Stand der Technik erforderlichen Einrichtung vor dem letzten Wärmetauscher und vor der elektrostatischen Feinstaubentfernung.

Der tiefere Temperaturbereich hat gegenüber dem Bereich von 300 - 450°C ferner den Vorteil, daß das Gas ein geringeres Volumen einnimmt und die Dimensionierung entsprechend kleiner erfolgen kann. Ein weiterer Vorteil ist die geringere thermische Belastung des Katalysators und eine entsprechend höhere Beständigkeit.

Vorteilhaft sind darüberhinaus der übersichtlichere Aufbau des Katalysatorsystems und der geringe Druckverlust der Abgase beim Durchströmen des Systems.

Zeolithe vom Typ Faujasit werden gewöhnlich entsprechend ihrem $SiO_2/Al_2O_3$-Verhältnis als Zeolith X bzw. Zeolith Y bezeichnet. Zeolith X entspricht etwa folgender Formel

$$Na_2O \cdot Al_2O_3 \cdot (2\text{-}3)SiO_2 \cdot n\ H_2O,$$

Zeolith Y etwa folgender Formel

$$Na_2O \cdot Al_2O_3 \cdot (3\text{-}6)SiO_2 \cdot n\ H_2O$$

$$(n = 0\text{-}8)$$

Ihre Herstellung ist beispielsweise beschrieben in den DE-B-1 038 016 und DE-B-1 098 929.

Die Zeolithe können in ihrer Natriumform oder auch — nach entsprechendem Ionenaustausch — in ihrer Erdalkali-, Seltenerd- oder Hydroniumform eingesetzt werden.

Die katalytisch aktiven Metallionen des Kupfers können grundsätzlich auf bekannte Weise durch Ionenaustausch in die Zeolithe eingebracht werden. Dies erfordert jedoch zusätzliche Herstell- und Waschschritte und ist aufgrund der besonderen Hydrolyseempfindlichkeit speziell dieser Metallionen nicht einfach durchführbar.

Überraschenderweise werden jedoch Katalysatoren gleicher oder sogar höherer Aktivität auf einfache Weise erhalten, indem die pulverförmigen Zeolithe zur Herstellung der Beschichtungen in Lösungen eines Kupfersalzes angeschlämmt werden. Als Salz wird dabei bevorzugt Sulfat und Chlorid eingesetzt. Eine weitere Möglichkeit besteht darin, das Kupfer in feinstgepulverter oxidischer Form dem Zeolithpulver beizumischen.

Die für das erfindungsgemäße Verfahren eingesetzten Flächengebilde können verschiedene geometrische Formen darstellen. Vorzugsweise sind es Platten, doch können auch Röhren, Gitter usw. gebildet werden.

Als Grundmaterialien für die vorzugsweise eingesetzten Platten dienen handelsübliche, temperaturbeständige, silicatische Preßmassen, vorzugsweise solche aus der Gruppe der Calciumsilicate. Die Aufbringung der katalytisch aktiven Schicht kann durch übliche Beschichtungsprozeduren wie Spritzen, Tauchen, Streichen, Bandbeschichten usw. erfolgen. Die Beschichtung kann je nach Verfahren in einer Dicke von 0,1 bis 2 mm, vorzugsweise von 0,3 - 1,5 mm (in trockenem Zustand) ausgeführt werden.

Zur Verbesserung der Haftung innerhalb der Schicht und auf der Platte werden der Zeolith/Aktivmetallverbindungs-Aufschlämmung wäßrige Lösungen silicatischer Verbindungen wie Kieselsol, Natron- oder Kaliwasserglas oder Gemische davon zugesetzt.

Als wäßrige Lösungen silicatischer Verbindungen können auch die bei bestimmten Zeolith-Synthesen anfallenden, Alkalisilicat enthaltenen Mutterlaugen eingesetzt werden. Die Festigkeit der Schicht kann weiterhin durch den Zusatz von Glasfaser zu der Aufschlämmung erhöht werden.

Nach dem Abbinden der Beschichtung werden die Platten auf übliche Weise bei Temperaturen oberhalb 100°C — vorzugsweise im Luftstrom — getrocknet.

Die Größe der Platten kann in weitem Umfang variiert werden; so ist es durchaus möglich, große, den gesamten Reaktor ausfüllende Platten herzustellen. Eine bevorzugte Ausführungsform ist es jedoch, kleinere, leichter herzustellende Platten in geeigneten Gestellen zu Einheiten zusammenzufassen, die dann im Baukastensystem nebeneinander und übereinander gestapelt werden können. Der Abstand zwischen den Platten innerhalb der Einheiten kann dabei zwischen 0,1 und 2,0 cm betragen.

Der Gegenstand der vorliegenden Erfindung soll nun anhand der folgenden Beispiele noch näher erläutert werden.

*Beispiel 1*

Eine handelsübliche, 4 mm dicke Platte aus temperaturbeständigem, silicatischem Material (Wollastonit) wird in quadratische Stücke von 20 cm Kantenlänge geschnitten.

36 g $CuCl_2 \cdot 2\ H_2O$ werden in 160 ml Wasser gelöst. In die Lösung werden 200 g Zeolith der ungefähren molaren Zusammensetzung 0,9 $Na_2O \cdot Al_2O_3 \cdot$ 4,7 $SiO_2 \cdot 8{,}0\ H_2O$ unter Rühren eingetragen. Dazu werden 20 ml stabilisiertes Kieselsol mit 30% $SiO_2$-Gehalt und 22 g Glasfaser gegeben. Unter intensivem Rühren mit einer Mischsirene werden 6 ml Wasserglaslösung hinzugegeben. Die Mischung bleibt einige Stunden lang verarbeitungsfähig.

Auf eine zugeschnittene Platte von 20 × 20 cm wird mit einem Rakel eine etwa 2 mm dicke Schicht der Suspension aufgetragen. Nach Antrocknen wird die Platte gewendet und die andere Seite in gleicher Weise beschichtet.

Nach Herstellung mehrerer solcher Platten werden für den eigentlichen Entstickungsversuch Zuschnitte mit Breiten zwischen 5 und 10 cm Breite hergestellt.

In ein zylindrisches Reaktionsrohr aus Stahl mit 30 cm Länge und 10 cm innerem Durchmesser werden parallel zueinander 9 Platten mit Breiten zwischen 5 cm (Randplatten) und 10 cm (Mittelplatte) eingebracht und mit Abstandshaltern auf etwa 8 mm Abstand voneinander fixiert. Die Plattenlänge beträgt 20 cm. Die Temperatur im Reaktionsrohr wird auf 150°C eingestellt.

Durch das Reaktionsrohr wird ein Teilstrom von 3 $m^3/h$ des Abgasstromes einer mit Erdgas befeuerten Großfeuerungsanlage geleitet, der nach Passieren des letzten Wärmetauschers eine Temperatur von 150°C und einen $NO_x$-Gehalt von 500 $mg/m^3$ aufweist. Vor dem Reaktionsrohr werden über eine Dosierpumpe 600 ml/h Ammoniakgas eingespeist.

Der $NO_x$-Gehalt nach Passieren des Katalysatorrohres ist auf 80 $mg/m^3$ (Entstickungsgrad 84%) zurückgegangen.

*Beispiel 2*

Die Herstellung der $CuCl_2$/Zeolith-Suspension erfolgt wie in Beispiel 1 mit dem Unterschied, daß das Kupfer(II)-chlorid in 200 ml Wasser gelöst wird. Durch die etwas höhere Wassermenge wird eine spritzfähige Suspension erhalten, die mit einer Druckluft-Spritzpistole auf die Platte aufgetragen

wird. Die Naßfilmdicke beträgt etwa 0,8 mm, die Filmdicke nach Trocknen etwa 0,5 mm.

Das Zuschneiden und Einbringen in den Reaktor erfolgt wie in Beispiel 1.

Ebenfalls analog Beispiel 1 werden 3 $m^3$/h Abgas von 150°C mit 500 mg/$m^3$ $NO_x$ sowie 600 ml/h Ammoniakgas durch den Reaktor geleitet.

Der $NO_x$-Gehalt nach Passieren des Katalysatorrohres ist auf 100 mg/$m^3$ (Entstickungsgrad: 80%) zurückgegangen.

**Patentansprüche**

1. Verfahren zur Reduzierung des Stickoxid-Gehaltes in Abgasen von Verbrennungsanlagen durch katalytische Reduktion mit Ammoniak in Gegenwart von einem oder mehreren Alumosilicaten der Faujasitgruppe und einer Kupferverbindung, dadurch gekennzeichnet, daß man die Abgase an temperaturbeständigen Flächengebilden vorbeiführt, die mit dem Katalysatorgemisch beschichtet sind, das zusätzlich Kieselsol und/oder Silicate enthält.

2. Verfahren nach Anspruch 1, dadurch gekennzeichnet, daß die Beschichtung der Flächengebilde zusätzlich Glasfasern enthält.

3. Verfahren gemäß Anspruch 1 oder 2, dadurch gekennzeichnet, daß man die katalytische Reduktion im Temperaturbereich von etwa 100 bis etwa 250°C durchführt.

4. Verfahren gemäß einem der Ansprüche 1 bis 3, dadurch gekennzeichnet, daß man als Flächengebilde handelsübliche temperaturbeständige silicatische Preßplatten aus der Gruppe der Calciumsilicate verwendet.

5. Verfahren gemäß einem der Ansprüche 1 bis 4, dadurch gekennzeichnet, daß man als Zeolithe der Faujasitgruppe Zeolith X und/oder Zeolith Y anwendet.

6. Verfahren nach einem der Ansprüche 1 bis 5, dadurch gekennzeichnet, daß die Flächengebilde parallel zueinander in einem Abstand von 0,1 bis 2 cm angeordnet sind.

**Claims**

1. A process for reducing the nitrogen oxide content of exhaust gases of internal combustion engines by catalytic reduction with ammonia in the prescence of one or more alumo silicates of the faujasite group and a copper compound, characterized in that the exhaust gases are passed over temperature-stable sheet-form materials coated with the catalyst mixture which additionally contains silica sol and/or silicates.

2. A process as claimed in claim 1, characterized in that the coating of the sheet-form material additionally contains glass fibers.

3. A process as claimed in claim 1 or 2, characterized in that the catalytic reduction is carried out at a temperature of from about 100 to about 250°C.

4. A process as claimed in any of claims 1 to 3, characterized in that commercially available, temperature-stable sheets of silicates from the group of calcium silicates are used as the sheet-form material.

5. A process as claimed in any of claims 1 to 4, characterized in that zeolite X and/or zeolite Y is/are used as zeolites of the faujasite group.

6. A process as claimed in any of claims 1 to 5, characterized in that the sheet-form materials are arranged parallel to one another at an interval of 0.1 to 2 cm.

**Revendications**

1. Procédé pour diminuer la teneur en des oxydes de l'azote dans des gaz d'échappement d'installations de combustion, par réduction catalytique à l'aide d'ammoniac en présence d'un ou plusieurs alumino-silicates, du groupe de la faujasite, et d'un composé du cuivre, procédé caractérisé en ce qu'on fait passer les gaz d'échappement sur des objets plats, pouvant bien résister à la température et qui sont revêtus du mélange catalytique, contenant en outre un sol de silice et/ou des silicates.

2. Procédé selon la revendication 1, caractérisé en ce que le revêtement des objets plats contient en outre des fibres de verre.

3. Procédé selon la revendication 1 ou 2, caractérisé en ce qu'on conduit la réduction catalytique dans un domaine de la température allant d'environ 100 à environ 250°C.

4. Procédé selon l'une des revendications 1 à 3, caractérisé en ce qu'on utilise, comme objets plats, des plaques comprimées, usuelles dans le commerce, de silicates pouvant bien résister aux températures et appartenant au groupe des silicates de calcium.

5. Procédé selon l'une des revendications 1 à 4, caractérisé en ce que l'on utilise, comme zéolite du groupe de la faujasite, une zéolite X et/ou une zéolite Y.

6. Procédé selon l'une des revendications 1 à 5, caractérisé en ce que les objets plats sont disposés en étant mutuellement parallèles à une distance de 0,1 à 2 cm.